(19) Europäisches Patentamt
European Patent Office
Office européen des brevets

(11) **EP 3 907 609 A1**

(12) **EUROPEAN PATENT APPLICATION**
published in accordance with Art. 153(4) EPC

(43) Date of publication:
**10.11.2021 Bulletin 2021/45**

(51) Int Cl.:
***G06F 9/48*** (2006.01)

(21) Application number: **20845366.2**

(22) Date of filing: **16.06.2020**

(86) International application number:
**PCT/CN2020/096252**

(87) International publication number:
**WO 2021/179462 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2020 CN 202010172152**

(71) Applicant: **Chongqing University of Posts and Telecommunications**
**Chongqing 400065 (CN)**

(72) Inventors:
• **SHANG, Fengjun**
  **Chongqing 400065 (CN)**
• **LIU, Chang**
  **Chongqing 400065 (CN)**
• **GUAN, Yifan**
  **Chongqing 400065 (CN)**

(74) Representative: **advotec.**
**Patent- und Rechtsanwaltspartnerschaft**
**Tappe mbB**
**Widenmayerstraße 4**
**80538 München (DE)**

(54) **IMPROVED QUANTUM ANT COLONY ALGORITHM-BASED SPARK PLATFORM TASK SCHEDULING METHOD**

(57)    A method for scheduling a task of a Spark platform based on an improved quantum ant-colony algorithm, which is related to the technical field of resource allocation and task scheduling. The method includes: collecting, by a node-information monitoring module, information of a state, such as central processing unit (CPU) utilization, memory utilization, and network transmission speed, of a node at which the non-edge-computing application is located; sending the information periodically to a node-information collecting module; updating, by the node-information collecting module, an indicator of the state collected by itself; sending, by a Spark scheduler, information of a to-be-scheduled task and a list of computing resource nodes that are currently available, to a task-schedule managing module; acquiring, by the task-schedule managing module from the node-information collecting module, information of a state of the computing resource nodes on the list; determining a scheduling scheme through an improved quantum ant-colony algorithm built in the task-schedule managing module; returning the scheduling scheme to the Spark scheduler; implementing the scheduling by the Spark scheduler. Duration for executing tasks can be effectively shorted, and efficiency for executing tasks can be effectively improved.

Figure 2

**Description**

The present application claims the priority to Chinese Patent Application No.202010172152.5, titled "METHOD FOR SCHEDULING TASK OF SPARK PLATFORM BASED ON IMPROVED QUANTUM ANT-COLONY ALGORITHM", filed on March 12, 2020 with the China National Intellectual Property Administration, which is incorporated herein by reference in its entirety.

**FIELD**

The present disclosure relates to the technical field of resource allocation and task scheduling, and in particular to a method for scheduling a task of a Spark platform based on an improved quantum ant-colony algorithm.

**BACKGROUND**

In the field of big data, there are a series of data processing platforms, such as Hadoop, Spark, Storm, Flink, etc. The Spark, an open-source distributed cluster-computing platform maintained by Apache, is widely popularized and applied in the industry, because of high versatility, high usability, and a high computing speed due to memory-based computing. Edge-computing models improve flexibility and efficiency of the conventional big data processing platforms. At present, almost all electronic devices can connect to the Internet and generate massive data, and the data may be directly processed at edge nodes to significantly reduce response time and a network load. Therefore, a research trend in the industry is to combine the big data platforms and the edge-computing.

Requirements on a performance of the Spark platform are increasing with its wide application in the industry. A task scheduling mechanism of the Spark platform mainly aims at allocating a to-be-executed computing task reasonably among computing resources (nodes) that are currently available. The tasks are scheduled mainly based on data localization in the task scheduling mechanism of the platform. That is, the platform tries to activate a task first on a node at which a data file corresponding to the task is located, and schedules the task to other nodes when unable to activate the task within a certain period. In practice, the nodes in a cluster are usually highly heterogeneous in capability, due to different geographic locations, configuration updates, cluster expansion, etc. The task scheduling mechanism that only considers data localization may results in an unbalance in node loads. That is, a large quantity of tasks is allocated to a low-performance load in the cluster, while a high-performance node is in an idle state. Hence, an overall of the tasks consumes a lot of time, task execution efficiency is low, and computing resources are not fully exploited.

A series of improved task scheduling mechanism for the Spark platform is proposed in view of the above issues. For example, a pluggable resource allocation framework, dSpark, is capable to establish a temporal model according to a quantity of applications, an input and an output. For another example, a delayed scheduling algorithm is based on task localization priority. For another example, a longest-approximate-time-to-end (LATE) scheduling algorithm compares residue time of tasks to search for a delayed task in a cluster, and activate a backup on another node that is superior. Two aspects still need to be improved. A first aspect is how to measure capabilities of computing nodes more reasonably. Most algorithms researched for the Spark platform are based on a homogeneous cluster or a task to be scheduled, while practical nodes are usually highly heterogeneous in operation environments. A second aspect lies in the task-scheduling algorithm, namely, how to find a better allocation method to schedule tasks to nodes for execution, in order to accelerate execution of an application and improve a utilization rate of cluster computing resources.

**SUMMARY**

An objective is learning computing capacity of a node accurately, and scheduling a task to nodes for execution, so as to accelerate execution of an application. In view of the above, a method for scheduling a task of a Spark platform based on an improved quantum ant-colony algorithm is provided according to embodiments of the present disclosure. Each node is provided with a node-information monitoring module. The Spark platform includes a node-information collecting module, a Spark scheduler, and a task-schedule managing module. Scheduling the task includes:

> determining an application to be an edge-computing application or a non-edge-computing application by an adaptive classifier, after the application is submitted by a user;
>
> in case of the edge-computing application,
> activating the edge-computing application on a network edge node at which the application is submitted, to complete the scheduling;
>
> in case of the non-edge-computing application,

collecting, by the node-information monitoring module, information of a state of a node at which the non-edge-computing application is located, where the information of the state includes a utilization rate of a central processing unit (CPU), a utilization rate of a memory, and a network transmission speed;

sending the information of the state periodically to the node-information collecting module; and

updating, by the node-information collecting module, a received indicator of the state received by the node-information collecting module;

sending, by the Spark scheduler, information of a to-be-scheduled task and a list of computing resource nodes that are currently available, to the task-schedule managing module;

acquiring, by the task-schedule managing module from the node-information collecting module, the information of the state of the computing resource nodes on the list;

determining, by the task-schedule managing module, a scheduling scheme through the improved quantum ant-colony algorithm built in the task-schedule managing module;

returning, by the task-schedule managing module, the scheduling scheme to the Spark scheduler; and

implementing the scheduling by the Spark scheduler.

In an embodiment, the adaptive classifier is configured to: acquire a size of a data file to be processed by the application, a type of the data file, and a type of an operator in the application, where the type of the operator is acquired by semantic segmentation and recognition through codes; calculate a calculation amount of the application and a network transmission requirement of the application; classify the application with the calculation amount less than a first threshold and the network transmission requirement greater than a second threshold as the edge-computing application; and classify the application with the calculation amount greater than the first threshold and the network transmission requirement less than the second threshold to be the non-edge-computing application.

In an embodiment, the improved quantum ant-colony algorithm built in the task-schedule managing module includes:

step S101: creating a pheromone matrix and a quantum pheromone probability-amplitude matrix in initialization, where each element in the pheromone matrix is set to be 1, and each element in the quantum pheromone probability-amplitude matrix is set to be $\left(1/\sqrt{2}, 1/\sqrt{2}\right)^{T}$;

step S102: determining whether an ant colony is in a stagnant state based on a difference between a sequential number of a current round of iteration and a sequential number of a round at which a history optimal ant is updated; going to step 103 in a case that the ant colony is in the stagnant state; and going to step 104 in a case that the ant colony is not in the stagnant state and is in a normal state;

step S103: generating ants in a catastrophic state, where a part of the ants is generated according to a rule of state transition and a catastrophe ratio that is set, and another part of the ants is randomly generated; setting the current round to be a new updating round; and going to step S105;

step S104: generating all ants according to the rule of state transition, and going to step S105;

step S105: calculating a fitness of each ant according to a fitness equation; optimizing each ant within a neighborhood through a neighborhood-search strategy; updating the fitness of the corresponding ant in a case that a better solution is found in the optimizing; comparing an ant with a highest fitness in the current round with the history optimal ant; going to step S106 in a case that the highest fitness is higher that a fitness of the history optimal ant; and going to step S107, in a case that the highest fitness is not higher that a fitness of the history optimal ant;

step S106: recording the ant with the highest fitness in the current round, to update the history optimal ant; setting the current round to be the round at which the history optimal ant is updated; and going to step 107;

step S107: updating the pheromone matrix and the quantum pheromone probability-amplitude matrix according to a pheromone updating rule;

step S108: determining whether a quantum pheromone probability-amplitude exceeds an upper threshold or a lower threshold through a minimax manner; updating the quantum pheromone probability-amplitude, in a case that the quantum pheromone probability-amplitude exceeds the upper threshold or the lower threshold; and

step S109, terminating the iteration, and outputting the an optimal solution, which is a task scheduling scheme corresponding to the history optimal ant, in a case that the sequential number of the current round is greater than or equal to a set round number of the iteration; and increasing the sequential number of the current round of the iteration by 1, and going to step 102, in a case that the sequential number of the current round is smaller than the set round number of the iteration.

In an embodiment, determining whether the ant colony is in the stagnant state based on the difference between the sequential number of the current round of the iteration and the sequential number of the round at which the history optimal ant is updated, includes:

calculating a quantity of stagnant rounds, where the quantity of stagnant rounds is equal to the difference between the sequential number of the current round of the iteration and the sequential number of the round at which the history optimal ant is updated;

determining the ant colony is in the normal state in a case that a "stagnant state" is 0, and determining the colony is in the stagnant state, in a case that the "stagnant state" is 1, where the stagnant state serves as a catastrophic condition and the "stagnant state" is defined as:

$$\text{stagnant state} = \begin{cases} 1, & \text{quantity of stagnant rounds} \geq \text{stagnant state threshold} \\ 0, & \text{quantity of stagnant rounds} < \text{stagnant state threshold} \end{cases}.$$

In an embodiment, the fitness of each ant is inversely proportional to a predicted duration for completing the task according to a corresponding task scheduling scheme obtained through the method for scheduling the task of the Spark platform, where calculation of the predicted duration includes:

step S201, obtaining a CPU capability, a current capability of a memory display program MEM, and the network transmission speed $NW_{speed}$, of the current node;
step S202, indicating, through a memory overflow flag, a possibility of memory overflow due to assigning a task in the task scheduling scheme;
step S203, calculating a transmitting duration $T_t$ for scheduling the task between nodes and a calculating duration $T_c$ for executing calculation of the task, according to the CPU capacity of the current node, the current capacity of the MEM of the current node, the network transmission speed $NW_{speed}$ of the current node, and the memory overflow flag of assigning task $i$ to node $j$; and calculating a starting duration $T_s$ for waiting the task $i$ to be executed, according to a task queue on the node $j$;
step S204, determining a sum of the $T_t$, the $T_c$ and the $T_s$ for a node as a duration for such node to complete the task; and
step S205, calculating the duration for each node, to which a task is assigned, to complete the assigned task, and determining a maximum among the durations for all nodes to which a task is assigned, as a total duration for completing all tasks, which is a duration for completing the task scheduling scheme.

In an embodiment, the transmitting duration $T_t$ for scheduling the task between nodes is:

$$T_t = \begin{cases} 0 & , \text{ in case of executed locally} \\ \dfrac{\text{data file size}}{\min\left\{NW_{speed, \text{ data file location}}, NW_{speed, \text{ scheduled target node}}\right\}} & , \text{ in case of not executed locally} \end{cases},$$

where $NW_{speed, \text{ data file location}}$ represents the network transmission speed of a node at which the data file corresponding to the current task is located, and $NW_{speed,\ scheduled\ target\ node}$ represents the network transmission speed of a target node to which the task is scheduled.

In an embodiment, the calculating duration $T_c$ for executing calculation of the task is:

$$T_c = \frac{\text{quantity of task instructions}}{CPU_{\text{current capacity of scheduled target node}}} \times \left(1 + T_{spill} * SPILL_{i,j}\right),$$

where $SPILL_{i,j}$ represents the memory overflow flag of assigning the task i to the node j, $T_{spill}$ represents an extra time proportion caused by the task overflow, and the $CPU_{\text{current capacity of scheduled target node}}$ represents the current CPU capacity of the node j, which is the target node of scheduling.

In an embodiment, the starting duration $T_s$ for waiting the task i being executed is:

$$T_s = \sum_{u=1}^{k} \left(T_{c,u} + T_{t,u}\right);$$

where $T_{c,u}$ represents the calculating time of a $u^{\text{th}}$ task in the task queue on a target node of task i, $T_{t,u}$ represents the transmitting time of the $u^{\text{th}}$ task in the task queue on the target node of task i, and k represents a length of the task queue on the target node.

In an embodiment, generating the ants in the catastrophic state includes:

retaining ants that are randomly selected in the ant colony, where a ratio of the selected ants to the ant colony is x in quantity; and
replacing the other ants in the ant colony with ants that are randomly generated; where x ranges from 0 to 1, and is inversely proportional to an intensity of a catastrophe.

In an embodiment, the minimax manner that controls the quantum pheromone probability-amplitude includes:

step S301, determining whether the quantum pheromone probability-amplitude needs to be updated through the upper threshold $QP_{\text{max}}$ and the lower threshold $QP_{\text{min}}$;
step S302, updating the quantum pheromone probability-amplitude based on

$$\alpha = \begin{cases} QP_{\text{max}}, & \alpha > QP_{\text{max}} \\ QP_{\text{min}}, & \alpha < QP_{\text{min}} \end{cases}$$

$$\beta = \begin{cases} QP_{\text{max}}, & \beta > QP_{\text{max}} \\ QP_{\text{min}}, & \beta < QP_{\text{min}} \end{cases},$$

in a case that the quantum pheromone probability-amplitude needs to be updated, where $\alpha$ and $\beta$ represent the quantum pheromone probability-amplitude; and
step S303, updating one of the quantum pheromone probability-amplitude $\alpha$ or $\beta$ based on $|\alpha|^2 + |\beta|^2 = 1$, in a case that the other of $\alpha$ or $\beta$ is updated, where "| |" represents obtaining an absolute value.

In embodiments of the present disclosure, a difference among capabilities of the heterogeneous nodes in the cluster is considered, and computing capabilities of the nodes can be well exploited in the heterogeneous cluster. In case of strong node heterogeneity, the capability of a node is accurately measured through multiple factors such as CPU, memory, network bandwidth and overflow possibility, and the improved quantum ant-colony algorithm is used to model a task scheduling problem and search for an optimal solution. Thus, the to-be-scheduled task is reasonably assigned to a computing resource node for execution. A utilization rate of computing resources in the cluster is improved, execution time of the task is effectively shortened, and execution efficiency of the task is increased.

## BRIEF DESCRIPTION OF THE DRAWINGS

Figure 1 is a modular schematic diagram of a method for scheduling a task of a Spark platform based on an improved quantum ant-colony algorithm according to an embodiment of the present disclosure;

Figure 2 is a flow chart of an improved quantum ant-colony algorithm of a method for scheduling a task of a Spark platform based on the improved quantum ant-colony algorithm according to an embodiment of the present disclosure; and

Figure 3 is a schematic diagram of an operation principle of an adaptive classifier of a method for scheduling a task of a Spark platform based on an improved quantum ant-colony algorithm according to an embodiment of the present disclosure.

## DETAILED DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

A method for scheduling a task of a Spark platform based on an improved quantum ant-colony algorithm is provided according to embodiments of the present disclosure. Each node is provided with a node-information monitoring module. The Spark platform includes a node-information collecting module, a Spark scheduler, and a task-schedule managing module. Scheduling of the task includes following steps.

The node-information monitoring module collects information of a state, such as a utilization rate of a central processing unit (CPU), a utilization rate of a memory, and a network transmission speed, of the node located. The node-information monitoring module sends the information of the state periodically to the node-information collecting module. The node-information collecting module updates an indicator of the state received by the node-information collecting module.

The Spark scheduler sends information of a to-be-scheduled task and a list of computing resource nodes that are currently available, to the task-schedule managing module.

The task-schedule managing module acquires the information of that state of the computing resource nodes on the list, from the node-information collecting module. The task-schedule managing module determines a scheduling scheme through the improved quantum ant-colony algorithm built in the task-schedule managing module. The task-schedule managing module returns the scheduling scheme to the Spark scheduler. The Spark scheduler implements scheduling.

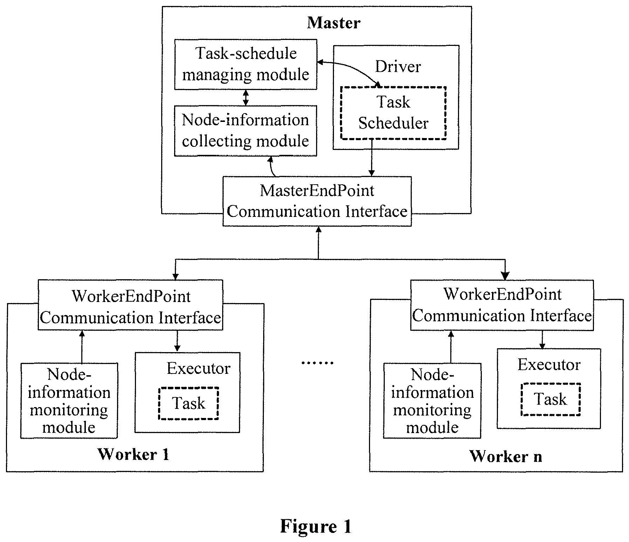

In this embodiment, a structure of the Spark platform is as shown in Figure 1. The Spark platform includes the node-information collecting module, the node-information monitoring module, and the task-schedule managing module. The node-information collecting module and the node-information monitoring module may transmit and receive information via a native EndPoint communication interface of the platform. The node-information monitoring module is configured to dynamically collecting information such as the utilization rate of the CPU, the utilization rate of the memory, and the network transmission speed, of the current node. The node-information monitoring module is further configured to periodically send the information to the node-information collecting module. The node-information collecting module is configured to collect, store, maintain, and update the indicator of the above. The task-schedule managing module may be optionally provided with a user-defined task scheduling algorithm. The improved quantum ant-colony algorithm for scheduling serves as the algorithm in embodiments of the present disclosure. In embodiments of the present disclosure, when there is a to-be-scheduled TaskSet in the cluster, a default task scheduler, TaskScheduler, in the Spark platform would not directly use a default scheduling mechanism thereof to assing a task, Task. Instead, the TaskScheduler sends the TaskSet and a series of information related to the computing nodes that are currently available, to the task-schedule managing module. The task-schedule managing module obtains the series of the information of the state of the computing nodes that are currently available, Executor, from the node-information collecting module. The task-schedule managing module searches for an optimal task scheduling scheme through a customized algorithm built in the task-schedule managing module. Finally, the TaskScheduler of the platform obtains the optimal task scheduling scheme calculated by the task-schedule managing module, from that task-schedule managing module. According to such scheme, the TaskScheduler communicates with each node, and sends the task to each node for execution.

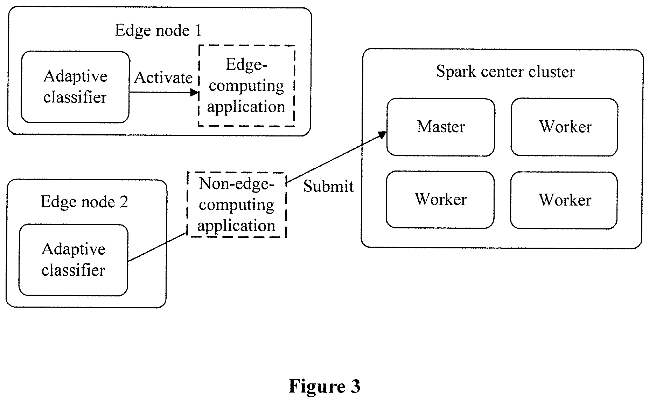

As shown in Figure 3, an adaptive classifier classifies an application by analyzing data of the application. In a specific embodiment, the adaptive classifier acquires a size of a data file to be processed by the application, a type of the data file, and a type of an operator in the application. The type of the operator is acquired by semantic segmentation and recognition through codes. The adaptive classifier calculates a calculation amount of the application and a network transmission requirement of the application. The adaptive classifier classifies an application with small calculation amount and a large network transmission requirement as an edge-computing application. The adaptive classifier classifies an application with large calculation amount and a small network transmission requirement to be a non-edge-computing application.

As shown in Figure 1, a method for scheduling a task of a Spark platform based on an improved quantum ant-colony algorithm is provided according to an embodiment present disclosure. The method includes following steps 1 to 4.

In step 1, the node-information monitoring module on a worker node, Worker, collects the information of the state, such as the utilization rate of the central processing unit (CPU), the utilization rate of the memory, and the network transmission speed, of a node at which the node-information monitoring module is located. The node-information monitoring module sends such information periodically to the node-information collecting module on a master node, Master. After receiving the above information, the node-information collecting module on the Master updates an indicator of the state of the corresponding node, which is locally stored.

In step 2, when the to-be-scheduled task set, i.e. TaskSet, appears in the cluster, the Spark task scheduler sends information of a series of tasks corresponding to the task set and a list of computing resource nodes that are currently available to the task-schedule managing module, so as to request a scheduling scheme.

In step 3, the task-schedule managing module obtains current information of the state of the computing resource nodes in the list, from the node-information collecting module. Then, the task-schedule managing module determines the scheduling scheme through the built-in improved quantum ant-colony algorithm, and returns the scheduling scheme to the Spark task scheduler.

In step 4, the Spark task scheduler sends the corresponding task to each computing resource node for execution, according to the scheduling scheme determined by the task-schedule managing module.

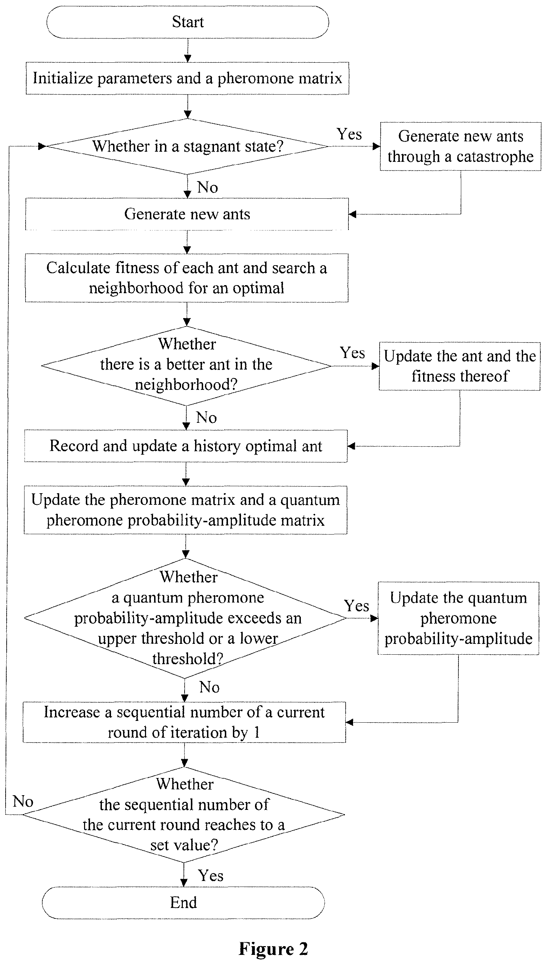

In the above step 3, the task-schedule managing module first receives information of the series of the tasks and the list of the computing resource nodes that are currently available from the Spark task scheduler. The task information includes a size of data of a task, a location of the task, and a quantity of instructions in the task. Then, the task-schedule managing module obtains, according to the list of the computing resource nodes that are currently available, the information of the state of the nodes in the list, from the node-information collecting module. The information of the state includes the utilization of the CPU, the utilization rate of the memory, and the network transmission speed. Afterwards, the task scheduling scheme minimizing a total duration for completing the tasks is calculated according to the above series of information, through the improved quantum ant-colony algorithm. In order to better illustrate the improved quantum ant-colony algorithm that generates the scheduling scheme in the task-schedule managing module in the method, a process for implementing the algorithm is described in conjunction with Figure 2.

The algorithm starts from step 1. In step 1, constant parameters are initialized. A pheromone matrix and a quantum pheromone probability-amplitude matrix are initialized. Each element in the pheromone matrix to 1, and setting each element in the quantum pheromone probability-amplitude matrix to $\left(1/\sqrt{2}, 1/\sqrt{2}\right)^{T}$. Thereby, randomness of selection at a beginning of iteration is ensured.

In step 2, a quantity of stagnant rounds is calculated based on difference between a sequential number of a current round of the iteration and a sequential number of a round at which a history optimal solution is last updated. Namely, a quantity of stagnant iterations $= T_{current\ round} - T_{last\ optimal\ update\ round}$. $T_{current\ round}$ represents the sequential number of the current round, and $T_{last\ optimal\ update\ round}$ represents the sequential number of the round at which the history optimal solution is last updated before the current iteration.

It is determined whether an ant colony is in a stagnant state based on the quantity of stagnant rounds and a stagnant state threshold that is set.

$$\text{stagnant state} = \begin{cases} 1, & \text{quantity of stagnant rounds} \geq \text{stagnant state threshold} \\ 0, & \text{quantity of stagnant rounds} < \text{stagnant state threshold} \end{cases}$$

In step 3, ants in a catastrophic state are generated, in a case that the ant colony is in the stagnant state. That is, a part of the ants is generated according to a rule of state transition and a catastrophe ratio that is set, and another part of the ants is randomly generated. A current round is set to be the last updating round. All ants are generated according to the rule of state transition, in a case that the colony is not in the stagnant state.

In step 4, a fitness of each ant is calculated according to a fitness equation. The fitness equation may be expressed as follows.

$$F_A = \cfrac{1}{T_{\text{task scheduling scheme corresponding to the ant A}}} \; ;$$

Each ant is optimized within a neighborhood through a neighborhood-search strategy. The fitness of the corresponding ant is updated in a case that a better solution is found in the optimizing.

In an embodiment, $T_{\text{task scheduling scheme corresponding to the ant A}}$ is a predicted duration for completing the task according to a corresponding task scheduling scheme, which is obtained through the method for scheduling the task of the Spark platform. A process of obtaining the predicted time includes steps S201 to S205.

In step S201, a CPU capability, a current capability of a memory display program MEM, and the network transmission speed $NW_{speed}$, of the current node are acquired

In step S202, a possibility of memory overflow due to assigning a task in the task scheduling scheme is indicated through a memory overflow flag.

In step S203, a transmitting duration $T_t$ for scheduling the task between nodes and a calculating duration $T_c$ for executing calculation of the task are calculated, according to the CPU capacity of a current node, the current capacity of the MEM of the current node, the network transmission speed $NW_{speed}$ of the current node, and the memory overflow flag of assigning task $i$ to node $j$. A starting duration $T_s$ for waiting the task i to be executed is calculated according to a task queue on the node $j$.

In step S204, a sum of the $T_t$, the $T_c$ and the $T_s$ for a node is determined as a duration for such node to complete the task.

In step S205, the duration for each node, to which a task is assigned, to complete the assigned task is calculated. A maximum among the durations for all nodes to which a task is assigned is determined as a total duration for completing all tasks, namely, a duration for completing the task scheduling scheme.

A process for calculating the transmitting duration $T_t$ for scheduling the task between nodes includes a flowing equation.

$$T_t = \begin{cases} 0 & \text{, in case of executed locally} \\ \cfrac{\text{data file size}}{\min\left\{NW_{speed,\text{ data file location}}, NW_{speed,\text{ scheduled target node}}\right\}} & \text{, in case of not executed locally} \end{cases}$$

$NW_{speed,\text{ data file location}}$ represents the network transmission speed of a node at which the data file corresponding to the current task is located. $NW_{speed,\text{ scheduled target node}}$ represents the network transmission speed of a target node to which the task is scheduled.

A process of calculating the calculating time $T_c$ for executing task calculation includes a following equation.

$$T_c = \cfrac{\text{quantity of task instructions}}{CPU_{\text{current capacity of scheduled target node}}} \times \left(1 + T_{spill} * SPILL_{i,j}\right)$$

$SPILL_{i,j}$ represents the memory overflow flag of assigning the task i to the *node j*, $T_{spill}$ represents an extra time proportion caused by the task overflow. The $CPU_{\text{current capacity of scheduled target node}}$ represents the current CPU capacity of the node $j$, which is the target node of scheduling.

A process of calculating the starting time $T_s$ for waiting the task i to be executed includes a following equation.

$$T_s = \sum_{u=1}^{k} \left(T_{c,u} + T_{t,u}\right)$$

$T_{c,u}$ represents the calculating time of a $u^{th}$ task in the task queue on a target node of task i. $T_{t,u}$ represents the transmitting time of the $u^{th}$ task in the task queue on the target node of task *i*. *k* represents a length of the task queue on the target node.

In step 5, an ant with a highest fitness in a current round of iteration is acquired, and is compared with a history optimal ant. The ant with the highest fitness in the current round is recorded to update the history optimal ant, in a case that the highest fitness is higher that a fitness of the history optimal ant.

In step 6, the pheromone matrix is updated according to a pheromone updating rule. The pheromone updating rule is expressed as follows.

$$TP_{t+1} = (1-\rho)TP_t + \Delta TP$$

$$\Delta TP_{i,j} = \begin{cases} F_A * \beta_{i,j}^{\mu}, i = A_i \\ 0 \quad, i \neq A_i \end{cases};$$

$TP_{1+t}$ represents a pheromone of a t+1th round of the iteration. $\Delta TP$ represents a change in the pheromone. $\Delta TP_{i,j}$ represents a change in the pheromone on a path of assigning the task $i$ to the node $j$. $\beta_{i,j}^{\mu}$ represents a probability-amplitude of a qubit corresponding to the path of assigning the task $i$ to the *node j* in the quantum pheromone probability-amplitude matrix. $A_i$ represents an $i$[th] element in the ant A, which is the target node for the task i in the task scheduling scheme corresponding to the ant A. $\rho$ is a evaporating rate of the pheromone. $F_A$ represents the fitness of the ant A. $\mu$ represents a relative importance of path visibility for a certain path when the pheromone is updated.

In step 7, a quantum pheromone probability-amplitude is updated via a quantum rotation gate. It is determined whether the quantum pheromone probability-amplitude exceeds an upper threshold or a lower threshold through a minimax manner. The quantum pheromone probability-amplitude is updated based on a following equation, in case of exceeding the upper threshold or the lower threshold.

$$\alpha = \begin{cases} QP_{max}, \alpha > QP_{max} \\ QP_{min}, \alpha < QP_{min} \end{cases}$$
$$\beta = \begin{cases} QP_{max}, \beta > QP_{max} \\ QP_{min}, \beta < QP_{min} \end{cases};$$

Further, one of the quantum pheromone probability-amplitude $\alpha$ or $\beta$ is updated based on $|\alpha|^2 + |\beta|^2 = 1$, in a case that the other of $\alpha$ or $\beta$ is updated. "| |" represents an absolute value.

In step 9, the iteration terminates, and an optimal solution is outputted, in a case that the sequential number of the current round is greater than or equal to a set round number of the iteration. The optimal solution is a task scheduling scheme corresponding to the history optimal ant. The sequential number of the current round of the iteration is increased by 1, and the process goes back to step 102, in a case that the sequential number of the current round is smaller than the set round number of the iteration.

Finally, the task-schedule managing module sends the optimal scheduling scheme, which is calculated through the improved quantum ant-colony algorithm, to the Spark task scheduler. The Spark task scheduler sends the task to the corresponding computing resource node for execution, according to the scheduling scheme. Thereby, reasonable and efficient scheduling of tasks are achieved, and a utilization rate of computing resources in a cluster is improved, and a duration for completing the tasks is shortened.

Although the embodiments of the present disclosure have been shown and described, changes, modifications, substitutions and transformations can be made to these embodiments by those skill in the art without departing from the principle and spirit of the present disclosure. The scope of the present disclosure is defined by the appended claims and equivalents thereof.

Those skilled in the art can clearly understand that, for convenience and conciseness of the description, a specific working process of the above system, device, and unit may refer to a corresponding process in the foregoing method embodiments, which is not repeated herein.

In several embodiments provided in the present disclosure, it should be understood that the disclosed system, device, and method may be implemented in other ways. For example, the device embodiments described above are only illustrative. For example, division of units is only based on logical functions, and there may be other division manners in actual implementation. For example, multiple units or components may be combined or integrated into another system, or some features may be omitted or not implemented. In addition, the mutual coupling, direct coupling, or communication connection that is displayed or discussed may be indirect coupling or communication connection through some interfaces, devices or units, and may be in electrical, mechanical, or other forms.

The units described as separate components may or may not be physically separated, and the components displayed as units may or may not be physical units. That is, they may be located in one place, or may be distributed on multiple network units. Some or all of the units may be selected according to actual needs to achieve the objectives of the solutions of the embodiments.

In addition, the functional units in all embodiments of the present disclosure may be integrated into one processing unit, or each unit may exist alone physically, or two or more units may be integrated into one unit. The above integrated unit can be realized in a form of hardware or software functional unit.

The integrated unit may be stored in a computer readable storage medium in case of being implemented in a form of a software functional unit and being sold or used as an independent product. Based on this understanding, an essence or a part that contributes to the existing technology, of a technical solution of the present disclosure, or all or a part of the technical solution may be embodied in a form of a software product. The software product is stored in a storage medium, and includes multiple instructions to enable a computer device (such as a personal computer, a server, or a network device) to execute all or part of the steps of the methods described in all embodiments of the present disclosure. The aforementioned storage medium includes an USB flash drive, a mobile hard disk, a read-only memory (ROM), a random access memory (RAM), a magnetic disk, an optical disk, or another medium capable to store program codes.

As described above, the above embodiments are only intended to describe the technical solutions of the present disclosure, and not to limit the present disclosure. Although the present disclosure is described in detail with reference to the above embodiments, those skilled in the art should understand that, modifications can be made to the technical solutions recorded in the above embodiments, or equivalent replacements can be made to some of the technical features thereof, and the modifications and the replacements will not make the corresponding technical solutions deviate from the spirit and the scope of the technical solutions of the embodiments of the present disclosure.

**Claims**

1. A method for scheduling a task of a Spark platform based on an improved quantum ant-colony algorithm, wherein:

   each node is provided with a node-information monitoring module, and the Spark platform comprises a node-information collecting module, a Spark scheduler, and a task-schedule managing module; and
   the method comprises:

   determining an application to be an edge-computing application or a non-edge-computing application by an adaptive classifier, after the application is submitted by a user;
   in case of the edge-computing application,
   activating the edge-computing application on a network edge node at which the application is submitted, to complete the scheduling;
   in case of the non-edge-computing application,

   collecting, by the node-information monitoring module, information of a state of a node at which the non-edge-computing application is located, wherein the information of the state comprises a utilization rate of a central processing unit (CPU), a utilization rate of a memory, and a network transmission speed;
   sending, by the node-information monitoring module, the information of the state periodically to the node-information collecting module; and
   updating, by the node-information collecting module, a received indicator of the state received by the node-information collecting module;

   sending, by the Spark scheduler, information of a to-be-scheduled task and a list of computing resource nodes that are currently available, to the task-schedule managing module;
   acquiring, by the task-schedule managing module from the node-information collecting module, the information of the state of the computing resource nodes on the list;
   determining, by the task-schedule managing module, a scheduling scheme through the improved quantum ant-colony algorithm built in the task-schedule managing module;
   returning, by the task-schedule managing module, the scheduling scheme to the Spark scheduler;
   implementing the scheduling by the Spark scheduler.

2. The method according to claim 1, wherein determining the application to be the edge-computing application or the non-edge-computing application by the adaptive classifier comprises:

acquiring, by the adaptive classifier, a size of a data file to be processed by the application, a type of the data file, and a type of an operator in the application, wherein the type of the operator is acquired by semantic segmentation and recognition through codes;

calculating, by the adaptive classifier, a calculation amount of the application and a network transmission requirement of the application;

classifying, by the adaptive classifier, the application with the calculation amount less than a first threshold and the network transmission requirement greater than a second threshold as the edge-computing application; and

classifying, by the adaptive classifier, the application with the calculation amount greater than the first threshold and the network transmission requirement less than the second threshold to be the non-edge-computing application.

3. The method according to claim 1, wherein the improved quantum ant-colony algorithm built in the task-schedule managing module comprises:

step S101: creating a pheromone matrix and a quantum pheromone probability-amplitude matrix in initialization, wherein each element in the pheromone matrix is set to be 1, and each element in the quantum pheromone probability-amplitude matrix is set to be $\left(1/\sqrt{2}, 1/\sqrt{2}\right)^{T}$;

step S102:

determining whether an ant colony is in a stagnant state based on a difference between a sequential number of a current round of iteration and a sequential number of a round at which a history optimal ant is updated;

going to step 103 in a case that the ant colony is in the stagnant state; and

going to step 104 in a case that the ant colony is not in the stagnant state and is in a normal state;

step S103:

generating ants in a catastrophic state, wherein a part of the ants is generated according to a rule of state transition and a catastrophe ratio that is set, and another part of the ants is randomly generated;

setting the current round to be a new updating round; and

going to step S105;

step S104: generating all ants according to the rule of state transition, and going to step S105;

step S105:

calculating a fitness of each ant according to a fitness equation;

optimizing each ant within a neighborhood through a neighborhood-search strategy;

updating the fitness of the corresponding ant in a case that a better solution is found in the optimizing;

comparing an ant with a highest fitness in the current round with the history optimal ant;

going to step S106 in a case that the highest fitness is higher that a fitness of the history optimal ant; and

going to step S107, in a case that the highest fitness is not higher that a fitness of the history optimal ant;

step S106:

recording the ant with the highest fitness in the current round, to update the history optimal ant;

setting the current round to be the round at which the history optimal ant is updated; and

going to step 107;

step S107: updating the pheromone matrix and the quantum pheromone probability-amplitude matrix according to a pheromone updating rule;

step S108:

determining whether a quantum pheromone probability-amplitude exceeds an upper threshold or a lower threshold through a minimax manner;

updating the quantum pheromone probability-amplitude, in a case that the quantum pheromone probability-amplitude exceeds the upper threshold or the lower threshold; and

step S109:

terminating the iteration, and outputting the an optimal solution, which is a task scheduling scheme corresponding to the history optimal ant, in a case that the sequential number of the current round is greater than or equal to a set round number of the iteration; and

increasing the sequential number of the current round of the iteration by 1, and going to step 102, in a case that the sequential number of the current round is smaller than the set round number of the iteration.

4. The method according to claim 3, wherein determining whether the ant colony is in the stagnant state based on the difference between the sequential number of the current round of the iteration and the sequential number of the round at which the history optimal ant is updated, comprises:

calculating a quantity of stagnant rounds, where the quantity of stagnant rounds is equal to the difference between the sequential number of the current round of the iteration and the sequential number of the round at which the history optimal ant is updated;

determining the ant colony is in the normal state in a case that a "stagnant state" is 0, and determining the colony is in the stagnant state, in a case that the "stagnant state" is 1;

wherein the stagnant state serves as a catastrophic condition and the "stagnant state" is defined as:

$$\text{stagnant state} = \begin{cases} 1, & \text{quantity of stagnant rounds} \geq \text{stagnant state threshold} \\ 0, & \text{quantity of stagnant rounds} < \text{stagnant state threshold} \end{cases}.$$

5. The method according to claim 3, wherein the fitness of each ant is inversely proportional to a predicted duration for completing the task according to a corresponding task scheduling scheme obtained through the method, wherein calculation of the predicted duration comprises:

step S201, obtaining a CPU capability, a current capability of a memory display program MEM, and the network transmission speed $NW_{speed}$, of the current node;

step S202, indicating, through a memory overflow flag, a possibility of memory overflow due to assigning a task in the task scheduling scheme;

step S203,

calculating a transmitting duration $T_t$ for scheduling the task between nodes and a calculating duration $T_c$ for executing calculation of the task, according to the CPU capacity of the current node, the current capacity of the MEM of the current node, the network transmission speed $NW_{speed}$ of the current node, and the memory overflow flag of assigning task i to node $j$; and

calculating a starting duration $T_s$ for waiting the task $i$ to be executed, according to a task queue on the node $j$;

step S204, determining a sum of the $T_t$, the $T_c$ and the $T_s$ for a node, as a duration for such node to complete the task; and

step S205,

calculating the duration for each node, to which a task is assigned, to complete the assigned task; and determining a maximum among the durations for all nodes to which a task is assigned, as a total duration for completing all tasks, which is a duration for completing the task scheduling scheme.

6. The method according to claim 5, wherein the transmitting duration $T_t$ for scheduling the task between nodes is:

$$T_t = \begin{cases} 0 & , \text{in case of executed locally} \\ \dfrac{\text{data file size}}{\min\left\{NW_{speed,\text{ data file location}}, NW_{speed,\text{ scheduled target node}}\right\}} & , \text{in case of not executed locally} \end{cases};$$

and

wherein $NW_{speed,\text{ data file location}}$ represents the network transmission speed of a node at which the data file corresponding to the current task is located, and $NW_{speed, \text{scheduled target node}}$ represents the network transmission speed of a target node to which the task is scheduled.

**7.** The method according to claim 5, wherein the calculating duration $T_c$ for executing calculation of the task is:

$$T_c = \frac{\text{quantity of task instructions}}{CPU_{\text{current capacity of scheduled target node}}} \times \left(1 + T_{spill} * SPILL_{i,j}\right);$$

wherein $SPILL_{i,j}$ represents the memory overflow flag of assigning the task i to the node j, $T_{spill}$ represents an extra time proportion caused by the task overflow, and the $CPU_{\text{current capacity of scheduled target node}}$ represents the current CPU capacity of the node j, which is the target node of scheduling.

**8.** The method according to claim 5, wherein the starting duration $T_s$ for waiting the task i being executed is:

$$T_s = \sum_{u=1}^{k} \left(T_{c,u} + T_{t,u}\right);$$

wherein $T_{c,u}$ represents the calculating time of a $u^{th}$ task in the task queue on a target node of task i, $T_{t,u}$ represents the transmitting time of the $u^{th}$ task in the task queue on the target node of task i, and k represents a length of the task queue on the target node.

**9.** The method according to claim 3, wherein generating the ants in the catastrophic state comprises:

retaining ants that are randomly selected in the ant colony, wherein a ratio of the selected ants to the ant colony is x in quantity; and
replacing the other ants in the ant colony with ants that are randomly generated;
wherein x ranges from 0 to 1, and is inversely proportional to an intensity of a catastrophe.

**10.** The method according to claim 3, wherein the minimax manner that controls the quantum pheromone probability-amplitude comprises:

step S301, determining whether the quantum pheromone probability-amplitude needs to be updated through the upper threshold $QP_{max}$ and the lower threshold;
step S302, updating the quantum pheromone probability-amplitude based on

$$\alpha = \begin{cases} QP_{max}, & \alpha > QP_{max} \\ QP_{min}, & \alpha < QP_{min} \end{cases}$$

$$\beta = \begin{cases} QP_{max}, & \beta > QP_{max} \\ QP_{min}, & \beta < QP_{min} \end{cases},$$

in a case that the quantum pheromone probability-amplitude needs to be updated, wherein $\alpha$ and $\beta$ represent the quantum pheromone probability-amplitude; and
step S303, updating one of the quantum pheromone probability-amplitude a or $\beta$ based on $|\alpha|^2 + |\beta|^2 = 1$, in a case that the other of a or $\beta$ is updated, wherein "| |" represents obtaining an absolute value.

**Figure 1**

```
                    ┌─────────────────────────┐
                    │          Start          │
                    └─────────────────────────┘
                                 │
                                 ▼
           ┌──────────────────────────────────────────┐
           │ Initialize parameters and a pheromone matrix │
           └──────────────────────────────────────────┘
                                 │
                                 ▼
                   ◇ Whether in a stagnant state? ◇────Yes──►┌──────────────────┐
                                 │                           │ Generate new ants │
                                 │ No                        │ through a catastrophe │
                                 ▼                           └──────────────────┘
           ┌──────────────────────────────────────────┐            │
           │            Generate new ants             │◄───────────┘
           └──────────────────────────────────────────┘
                                 │
                                 ▼
           ┌──────────────────────────────────────────┐
           │ Calculate fitness of each ant and search a │
           │        neighborhood for an optimal        │
           └──────────────────────────────────────────┘
                                 │
                                 ▼
                ◇ Whether there is a better ant in the ◇──Yes──►┌──────────────────┐
                       neighborhood?                            │ Update the ant and the │
                                 │                              │   fitness thereof   │
                                 │ No                           └──────────────────┘
                                 ▼                                       │
           ┌──────────────────────────────────────────┐                 │
           │    Record and update a history optimal ant │◄──────────────┘
           └──────────────────────────────────────────┘
                                 │
                                 ▼
           ┌──────────────────────────────────────────┐
           │ Update the pheromone matrix and a quantum  │
           │ pheromone probability-amplitude matrix     │
           └──────────────────────────────────────────┘
                                 │
                                 ▼
                ◇ Whether a quantum pheromone            ◇──Yes──►┌──────────────────┐
                  probability-amplitude exceeds an               │ Update the quantum │
                  upper threshold or a lower                     │     pheromone      │
                  threshold?                                     │ probability-amplitude │
                                 │                               └──────────────────┘
                                 │ No                                     │
                                 ▼                                        │
           ┌──────────────────────────────────────────┐                  │
           │ Increase a sequential number of a current  │◄────────────────┘
           │        round of iteration by 1            │
           └──────────────────────────────────────────┘
                                 │
                                 ▼
                ◇ Whether the sequential number of       ◇
       No ──── the current round reaches to a
                       set value?
                                 │
                                 │ Yes
                                 ▼
                    ┌─────────────────────────┐
                    │           End           │
                    └─────────────────────────┘
```

**Figure 2**

15

**Figure 3**

## INTERNATIONAL SEARCH REPORT

| International application No. |
| --- |
| **PCT/CN2020/096252** |

### A. CLASSIFICATION OF SUBJECT MATTER

G06F 9/48(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI: 量子, 蚁群, 任务, 调度, 分类, 边缘, 计算, 应用程序, 节点, quantum, ant colony, task, schedule, classification, edge, compute, application, node

### C. DOCUMENTS CONSIDERED TO BE RELEVANT

| Category* | Citation of document, with indication, where appropriate, of the relevant passages | Relevant to claim No. |
| --- | --- | --- |
| A | CN 110086855 A (KAITUO INFORMATION SYSTEMS CO., LTD.) 02 August 2019 (2019-08-02) <br> description, paragraphs [0047]-[0076] | 1-10 |
| A | CN 110413389 A (ZHEJIANG UNIVERSITY OF TECHNOLOGY) 05 November 2019 (2019-11-05) <br> entire document | 1-10 |
| A | CN 110069325 A (SOUTHWEST MINZU UNIVERSITY) 30 July 2019 (2019-07-30) <br> entire document | 1-10 |
| A | US 2019250947 A1 (SALESFORCE. COM, INC.) 15 August 2019 (2019-08-15) <br> entire document | 1-10 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 December 2020** | **11 December 2020** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/096252**

| Patent document cited in search report | | | Publication date (day/month/year) | Patent family member(s) | | | Publication date (day/month/year) |
|---|---|---|---|---|---|---|---|
| CN | 110086855 | A | 02 August 2019 | None | | | |
| CN | 110413389 | A | 05 November 2019 | None | | | |
| CN | 110069325 | A | 30 July 2019 | None | | | |
| US | 2019250947 | A1 | 15 August 2019 | US | 2018074852 | A1 | 15 March 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010172152